# EUROPEAN PATENT SPECIFICATION

(11) **EP 2 241 866 B1**
(45) Date of publication and mention of the grant of the patent: **07.11.2018**
(21) Application number: 09158035.7
(22) Date of filing: 16.04.2009
(51) Int. Cl.: G01F 3/22, G01F 15/00

(54) **Gas meter**
Gasmessgerät
Compteur de gaz

(43) Date of publication of application: 20.10.2010
(73) Proprietor: Itron GmbH, 76185 Karlsruhe (DE)
(72) Inventor: Klijs, Pieter, 4845, PC Wagenberg (NL); Schuhbaum, Heinz, 76889, BARBELROTH (DE)
(74) Representative: Howson, Richard Giles Bentham

(56) References cited:
- DE-B- 1 179 388
- GB-A- 799 024
- GB-A- 876 020
- GB-A- 2 251 904

## Description

The present invention is related to a gas meter for supplying gas to residences, office buildings and the like, and more particularly to a single pipe gas meter equipped with a shut-off valve.

Natural gas is a well-known, clean, and relatively inexpensive fuel source. As such, gas distribution systems and gas meters have been widely installed in various population centers throughout the industrialized world.

Gas meters usually comprise a sealed gastight outer housing connected to an inlet pipe for the gas admission and to an outlet pipe for the gas exhaust, and a measuring assembly with an indicating device. A shut-off valve can additionally be connected to typically the inlet pipe so that gas supply can be cut off using the shut-off valve, for instance in case of fire, or for other security reasons, or if a customer has not paid a gas invoice.

The inlet pipe can be located at a different position to the outlet pipe. Such a gas meter is called a two pipe gas meter. It is also possible that the inlet pipe and the outlet pipe are coaxial pipes. In this case, the gas meter is called a single pipe gas meter.

It is rather difficult to put the shut-off valve within a single pipe gas meter. To that purpose, it is known to use a large housing for the meter. But this solution would take a large investment and add to the height of the meter. Moreover, it could mean that the meter would no longer fit into a meter cabinet.

Another known alternative is to use a single pipe to two pipe converter.

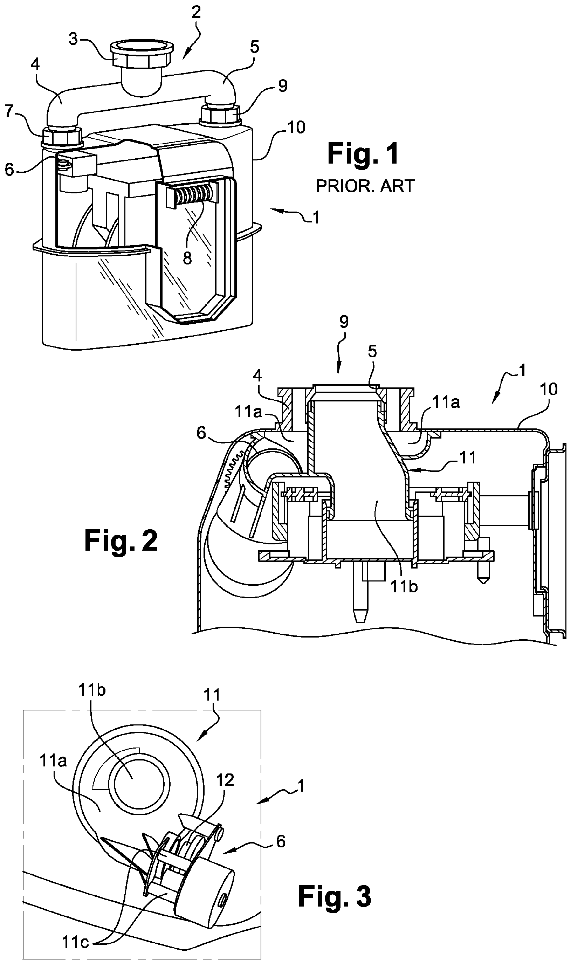

With reference to figure 1, such a gas meter installation comprises a gas meter 1 and a converter 2. The gas enters the meter 1 through a single pipe portion 3 which includes a coaxial portion of inlet and outlet pipes 4,5. Then, the gas flows through the inlet pipe 4 and into an inlet 7 of the meter 1. A gas shut-off valve 6 for selectively turning on or off the supply of gas is located near the inlet 7 within the external housing 10 of the gas meter 1. When the shut-off valve 6 is in the "open" position, it permits the free flow of gas through the valve 6. When the shut-off valve 6 is in the "closed" position, the supply of gas would be blocked.

After the gasses passes through the shut-off valve 6, the gas is directed through a measuring assembly with an indicating device 8. Then, the gas flows out of an outlet 9 of the meter 1 and flows through the outlet pipe 5 and through the outlet part of the single pipe portion 3. The gas is thereafter routed into a house or other structure for consumption.

Such a gas meter suffers the shortcoming that the converter is expensive to buy and also introduces extra leakage points to the meter. This solution also would add to the height of the meter and could mean that the meter would no longer fit into a meter cabinet.

DE1179388 discloses a dry, slider-controlled gas meter with a central connection member. The crankshaft of a slide valve is mounted in the connection member.

Thus, an object of the present invention is to provide a single pipe gas meter equipped with a shut-off valve in such a manner as to solve the above-described problems.

This is accomplished by a gas meter according to claim 1.

This specific arrangement provides that the shut-off valve can be put easier within the single pipe gas meter and that the components can be accommodated compactly in the housing. The gas meter can therefore be connected to a gas admission pipe and a gas exhaust pipe that are coaxial pipes.

The external housing typically comprises a single opening for both the gas admission within the meter and the gas exhaust outside the meter.

It is to be appreciated that the gas meter comprises a single piece comprising the gas admission area and the outlet path.

The gas admission area is preferably of helicoidal shape.

It is also preferable that the outlet path comprises ribs.

Other features and advantages of the invention will become apparent from the following description of an embodiment of the invention given by way of a non-limiting example only, and with reference to the accompanying drawings, in which:
- Figure 1 is a perspective front view of a gas meter of the prior art,
- Figure 2 is a partial front view of the inside of a gas meter according to the invention,
- Figure 3 is partial top view of the gas meter,
- Figure 4 is a perspective underside view of a part of the gas meter, and
- Figure 5 is a comparative view between a gas meter of the prior art and a gas meter according to the invention.

As illustrated in Figure 2, a gas meter 1 according to the invention comprises an external housing 10, an inlet/outlet area 9 surrounded by a nut put in the top of the gas meter 1, a shut-off valve 6, as well as an admission/exhaust device 11.

The gas enters the meter 1 through an inlet pipe 4 in the area 9. The gas is then admitted in an admission area 11a of the flow manifold 11. The admission area 11a is an inlet cavity which is intended to receive the gas that comes from the outside of the gas meter 1 through the inlet pipe 4.

The inlet cavity 11a can be opened and closed with the shut-off valve 6. As mentioned above, when the shut-off valve 6 is in an "open" position, it permits the free flow of gas through the valve 6, whereas when the shut-off valve 6 is in a "closed" position, the supply of gas would be blocked.

When the valve 6 is in the "open" position, the gas is routed toward a measuring assembly, not shown. The measuring assembly can typically comprise at least one deformable membrane which separates two adjacent displacement measuring chambers. The gas whose volume is to be measured is injected into and evacuated from the measuring chambers and causes the membrane to move back and forth. Membrane motion is transmitted by a mechanical system to a counter which thus serves to display the quantity of gas which has passed through the measuring chambers.

After passing through the measuring assembly, the gas flows out an outlet path 11b of the device 11 and an outlet pipe 5. The gas is thereafter routed through the outlet pipe 5 into a house or other structure for consumption.

The outlet path 11b passes through the inlet cavity 11a. Thus, the introduction of the inlet cavity 11a around the outlet path 11b makes it possible to integrate the shut-off valve 6 within the single pipe meter 1 without adding to the dimensions of the meter 1.

Figure 3 is a top view of the gas meter 1. The outlet path 11b is surrounded by the coaxial inlet cavity 11a. The shut-off valve 6 comprises a blocking part 12 which can be translated from the "open" position up to the "closed" position thanks to guiding elements 11c of the device 11.

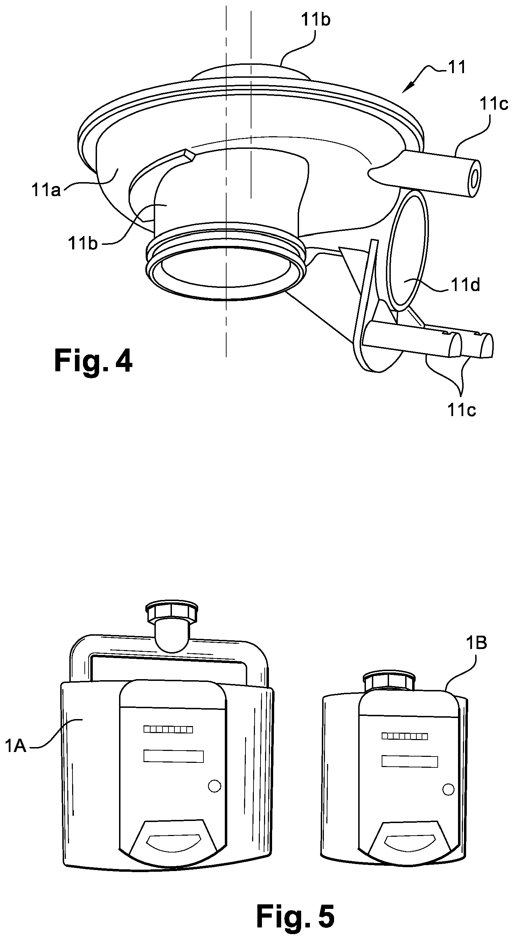

As shown in Figure 4, the admission/exhaust device 11 comprises a gas admission area 11a, a outlet path 11b of a cylindrical shape which passes through the gas admission area 11a, and guiding elements 11c. The device 11 is preferably a plastic moulded piece.

The gas admission area 11a is a helicoidal shaped cavity 11a that emerges from a lower outlet opening 11d that can be opened and blocked with the blocking part of the shut-off valve. The gas admission area 11a is preferably a helicoidal shaped cavity, in order to reduce the pressure lost of such a cavity.

The gas exhaust path 11b comprises an upper part located above the cavity 11a and a lower part located below the cavity 11a. The gas exhaust path 11b is intended to be connected at its lower extremity to the measuring assembly and at its upper extremity to an outlet pipe for routing the gas flow into a structure for consumption. The upper extremity of the gas exhaust path 11b advantageously comprises ribs for a best connection with the outlet pipe.

As illustrated in Figure 5, a single pipe gas meter 1B according to the invention is more compact than a gas meter 1A comprising a single pipe to two pipe converter.

## Claims

1. Gas meter (1) comprising:
an external housing (10);
a measuring assembly;
an inlet pipe (4) for the gas admission within the meter (1);
an outlet pipe (5) for the gas exhaust outside the meter (1); and
an inlet cavity (11a) coupled to the inlet pipe (4) for receiving the gas from the inlet pipe (4);
an outlet path (11b) coupled to the outlet pipe (5) for flowing the gas from the measuring assembly towards the outlet pipe (5);
a shut-off valve (6) coupled to the inlet cavity (11a) for allowing or blocking the gas flow toward the measuring assembly;
wherein the inlet cavity (11a) surrounds the outlet path (11b);
**characterised in that**:
the external housing (10) is the housing of the gas meter; and
the inlet cavity (11a), the outlet path (11b) and the shut-off valve (6) are placed within said housing (10).

2. Gas meter (1) according to claim 1, wherein the external housing (10) comprises a single opening (9) for both the gas admission within the meter (1) and the gas exhaust outside the meter (1).

3. Gas meter (1) according to claim 1 or 2, further comprising a single piece (11) comprising the gas inlet cavity (11a) and the outlet path (11b).

4. Gas meter (1) according to any of claims 1 to 3, wherein the gas inlet cavity (11a) is of helicoidal shape.

5. Gas meter (1) according to any of claims 1 to 4, wherein the outlet path (11b) comprises ribs.

## Patentansprüche

1. Gasmessgerät (1), umfassend:
ein äußeres Gehäuse (10);
eine Messanordnung;
ein Einlassrohr (4) für die Gaszuführung innerhalb des Messgeräts (1);
ein Auslassrohr (5) für die Gasabführung außerhalb des Messgeräts (1); und
einen mit dem Einlassrohr (4) gekoppelten Einlasshohlraum (11a) zur Aufnahme des Gases von dem Einlassrohr (4);
einen mit dem Auslassrohr (5) gekoppelten Auslasspfad (11b) zum Leiten des Gases von der Messanordnung zu dem Auslassrohr (5);
ein mit dem Einlasshohlraum (11a) gekoppeltes Absperrventil (6) zum Gestatten oder Blockieren von Gasstrom zu der Messanordnung;
wobei der Einlasshohlraum (11a) den Auslasspfad (11b) umgibt;
**dadurch gekennzeichnet, dass**
das äußere Gehäuse (10) das Gehäuse des Gasmessgeräts ist; und
der Einlasshohlraum (11a), der Auslasspfad (11b) und das Absperrventil (6) in dem Gehäuse (10)) platziert sind.

2. Gasmessgerät (1) nach Anspruch 1, wobei das äußere Gehäuse (10) eine einzige Öffnung (9) sowohl für die Gaszuführung innerhalb des Messgeräts (1) als auch die Gasabführung außerhalb des Messgeräts (1) umfasst.

3. Gasmessgerät (1) nach Anspruch 1 oder 2, ferner umfassend ein einziges Teil (11), das den Gaseinlasshohlraum (11a) und den Auslasspfad (11b) umfasst.

4. Gasmessgerät (1) nach einem der Ansprüche 1 bis 3, wobei der Gaseinlasshohlraum (11a) eine schraubenartige Form aufweist.

5. Gasmessgerät (1) nach einem der Ansprüche 1 bis 4, wobei der Auslasspfad (11b) Rippen umfasst.

## Revendications

1. Compteur à gaz (1), comprenant :
un boîtier externe (10) ;
un ensemble de mesure ;
un conduit d'entrée (4) pour l'admission de gaz à l'intérieur du compteur (1) ;
un conduit de sortie (5) pour la sortie de gaz hors du compteur (1) ; et
une cavité interne (11a) accouplée au conduit d'entrée (4) pour recevoir le gaz provenant du conduit d'entrée (4) ;
un trajet de sortie (11b) accouplé au conduit de sortie (5) pour permettre l'écoulement de gaz depuis l'ensemble de mesure vers le conduit de sortie (5) ;
une vanne d'arrêt (6) accouplée à la cavité d'entrée (11a) pour permettre ou bloquer l'écoulement de gaz vers l'ensemble de mesure ;
la cavité d'entrée (11a) entourant le trajet de sortie (11b) ;
**caractérisé en ce que** :
le boîtier externe (10) est le boîtier du compteur à gaz ; et
la cavité interne (11a), le trajet de sortie (11b) et la vanne d'arrêt (6) sont disposés à l'intérieur dudit boîtier (10).

2. Compteur à gaz (1) selon la revendication 1, dans lequel le boîtier externe (10) comprend une ouverture unique (9) à la fois pour l'admission de gaz à l'intérieur du compteur (1) et pour la sortie de gaz hors du compteur (1).

3. Compteur à gaz (1) selon la revendication 1 ou 2, comprenant en outre un élément unique (11) comprenant la cavité d'entrée de gaz (11a) et le trajet de sortie (11b).

4. Compteur à gaz (1) selon l'une quelconque des revendications 1 à 3, dans lequel la cavité d'entrée de gaz (11a) présente une forme hélicoïdale.

5. Compteur à gaz (1) selon l'une quelconque des revendications 1 à 4, dans lequel le trajet de sortie (11b) comprend des nervures.
